# EUROPEAN PATENT APPLICATION

(11) **EP 1 521 449 A2**
(43) Date of publication of application: **06.04.2005**
(21) Application number: 04255881.7
(22) Date of filing: 27.09.2004
(51) Int. Cl.: H04N 1/387

(54) **Organizing a digital image**

(30) Priority: 30.09.2003 US 677164
(71) Applicant: Hewlett-Packard Development Company, L.P., Houston, TX 77070 (US)
(72) Inventor: Gutkowski, Lawrence J., San Diego CA 92127 (US); Sievert, Otto K., Oceanside CA 92054 (US)
(74) Representative: Jackson, Richard Eric

(57) **Abstract**

A method embodiment includes identifying, within the digital image (52), a set of digitized objects (54). At least one of the digitized objects within the digital image is adjusted so that the adjusted digitized object (54) at least substantially conforms to a prescribed state. In varying embodiments, adjusting can include rotating, positioning, and/or resizing.

## Description

### BACKGROUND

Over the past decades, copiers have become one of the more essential office tools. With the advent of automatic document feeders, a user can place a multiple page original document in the feeder, press a couple buttons, walk away, and later return to find a multiple page copy ready to pick up. Nonetheless, it is still common and often desirable to manually place multiple objects on a copier's platen and then make a single copy containing images of all the objects. For example, a user may place a number of photographs on the copier, and make a single composite copy. Other common examples include recipes, returned checks, and business cards. It is also not uncommon for a user to cut out important pieces of text from a newspaper or other source and collect the pieces onto a single page.

It is usually very difficult to position objects on a copier's platen so that the orientation of each object is aligned with the other objects and consistent spacing is maintained. Even when the objects are painstakingly positioned, closing the copier's lid often disturbs the objects. A commonly attempted solution involves affixing the individual objects to an intermediary - a sheet of paper, for example - in a nicely aligned way, and then placing the single assembly on the copier. This procedure is tedious, and the tape glue or other material used to affix the objects can potentially mar the one or more of the objects.

Another commonly attempted solution involves scanning each object separately into an electronic image file. The user then combines all the electronic images into a single image file aligning each individual image as desired separately. The user then prints the combined image file. For typical users this is a very tedious, time consuming, and frustrating procedure. It can require complex software user interfaces and the transfer of large amounts of data from a scanner to computer. That data must be manipulated and then sent on to a printing device.

### DESCRIPTION OF THE DRAWINGS

Fig. 1 illustrates an exemplary computing environment in which embodiments of the present invention can be implemented.

Fig. 2 is a block diagram showing physical and logical components of the devices shown in Fig. 1.

Fig. 3 is a schematic illustration showing unorganized physical objects placed on a platen and a resulting digital image in which the digitized objects have been organized according to an embodiment of the present invention.

Fig. 4 is a block diagram showing an object organizer and its modules according to an embodiment of the present invention.

Fig. 5 is an exemplary flow diagram illustrating steps to organize a digital image according to an embodiment of the present invention.

Fig. 6 is an exemplary flow diagram expanding on the adjusting step of Fig. 5 according to an embodiment of the present invention.

Figs. 7A-7F are sequential representations of a digital image according to an embodiment of the present invention.

Figs. 8-16 are schematic illustrations showing physical objects roughly placed on a platen and a resulting digital image in which the digitized objects have been organized according to various embodiments of the present invention.

### DETAILED DESCRIPTION

***INTRODUCTION***: It is difficult, if not downright impossible, to place physical objects such as photos or business cards on a copier or scanner's platen in an organized manner. Consequently a digital image generated from those physical objects is also unorganized. Various embodiments of the present invention operate to identify digitized objects within a digital image and then to adjust one or more of those digitized objects so that the digitized objects at least substantially conform to a prescribed state.

The terms physical object, digital image, and digitized object are used throughout the following description. A physical object is any object having a surface that can be electronically scanned. Examples include photographs, business cards, and clippings or pages from periodicals or books. A digital image is an electronic grid of pixels selected and arranged to reveal any combination of text and/or graphics. A digital image can be one of or incorporated within any number of formats. Format examples include bitmap, PDL (page description format), PDF (Portable Document Format), TIFF (Tagged Image File Format), and JPEG (Joint Photographic Experts Group).

A digital image, for example, can be generated by electronically scanning a set of physical objects. The resulting digital image then contains a set of digitized objects. Each digitized object is a sub-grid of pixels (within the digital image) selected and arranged to reveal a replica of a surface of a corresponding physical object. In other words, a digitized object is an electronic replica of at least a portion of a physical object.

The state of a digitized object identifies factors such as size as well as location and orientation within a digital image. An adjustment to the state of a digitized object can be prescribed in any number of manners. For example, it is often desirable to adjust any one or combination of the noted factors so that a given digitized object is a adjusted in size, location, and/or orientation. Such prescribed adjustments can be random, calculated based upon the state of another digitized object, or based on some other predetermined criteria.

The description that follows is broken into sections. The first section, labeled "components" describes exemplary logical and physical elements used to implement various embodiments of the present invention. The next section, labeled "operation," describes exemplary steps taken to practice various embodiments of the present invention. The third section, labeled "examples," discusses a number of ways in which a digital image can be organized according to various embodiments of the present invention.

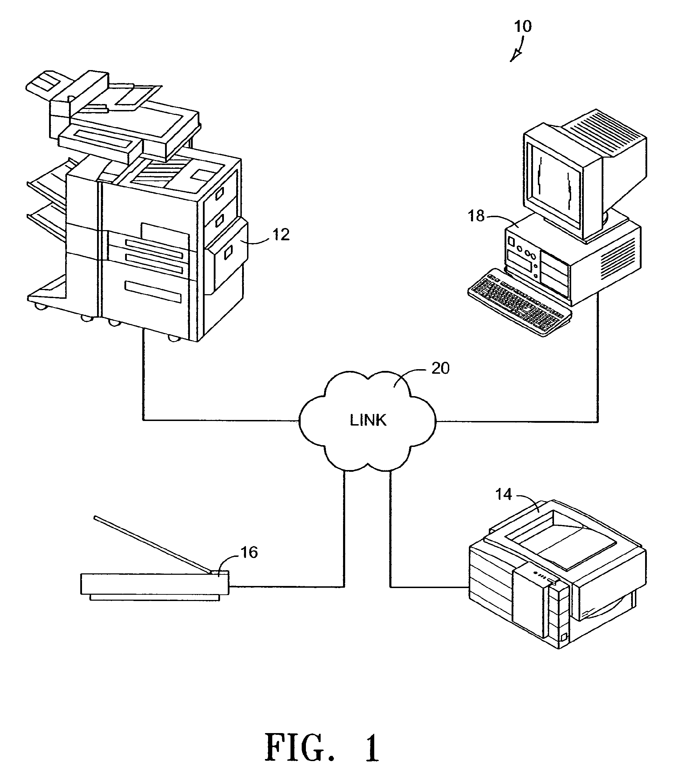

***COMPONENTS***: Fig. 1 illustrates an exemplary computing environment 10 in which various embodiments of the present invention may be implemented. Environment 10 includes, multi function peripheral (MFP) 12, printer 14, scanner 16, and computer 18. MFP 12 represents generally any device capable of functioning as a scanner, as a copier, and as a printer. As a scanner, MFP 12 is capable of generating a digital image from one or more physical objects that are placed on its platen. As a copier, MFP is capable of scanning an object placed on its platen and producing a printed representation or copy of that object. As a printer, MFP 12 is capable of producing a printed version of a digital image. MFP 12 may serve other functions as well.

Image forming device 14 represents generally any device capable of forming printed images on one or more pages. Scanner 16 represents generally any device capable of generating a digital image from one or more physical objects placed on its platen. Computer 18 represents generally any computing device capable of interacting with MFP 12, printer 14, and scanner 16. For example, computer 18 may be a desktop computer, a laptop computer, a PDA (Personal Digital Assistant) or any other device capable of communicating with MFP 12, printer 14, and scanner 16. Computer 18 may also be an embedded processor or controller in MFP 12.

Link 20 represents generally a cable, wireless, or remote connection via a telecommunication link, an infrared link, a radio frequency link, or any other connector or system of connectors that provide electronic communication between MFP 12, printer 14, scanner 16, and computer 18. Link 20 may include an intranet, the Internet, or a combination of both. Each portion of link 20 connecting a given component 12-16 to computer 18 may or may not be distinct from the remaining portions of link 20. For example image forming device 14 may be connected to computer 18 via a parallel connection, scanner 16 may be connected via a USB (Universal Serial Bus) connection, and MFP 12 may be connected via the Internet. Link 20 may be embedded in MFP 12.

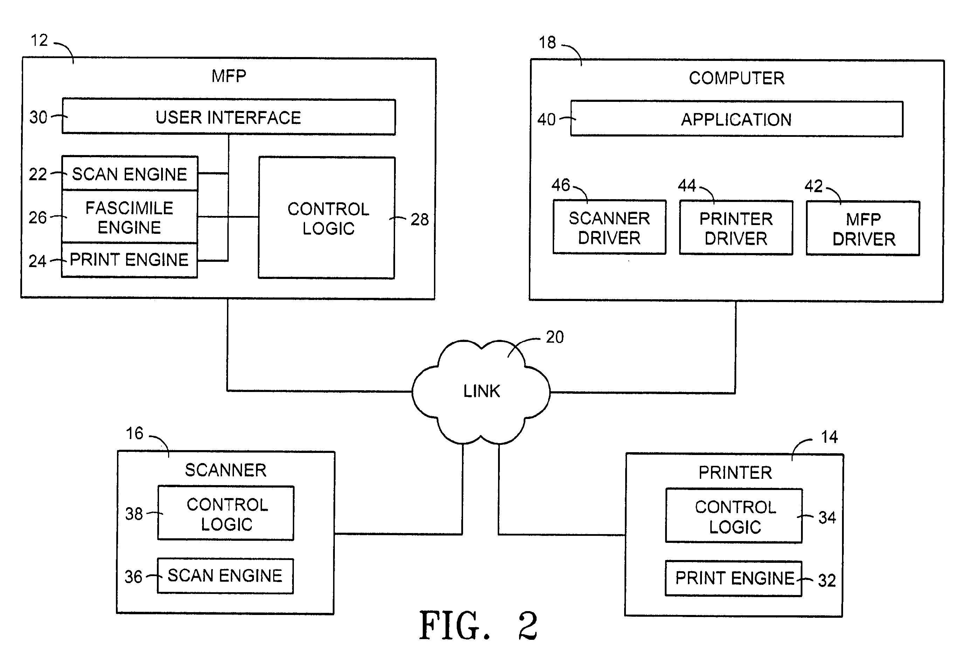

Fig. 2 is an exemplary block diagram showing the physical and logical components of MFP 12, printer 14, scanner 16, and computer 18 of Fig. 1. MFP 12 includes scan engine 22, print engine 24, facsimile engine 26, control logic 28, and user interface 30. Scan engine 22 represents the circuitry and other physical components that enable MFP 12 to function as a scanner. Print engine 24 represents the circuitry and other physical components that enable MFP 12 to function as a printer. Facsimile engine 26 represents the circuitry and other physical components that enable MFP 12 to function as a facsimile device.

Control logic 28 represents one or more programs responsible for controlling and coordinating the operations engines 22-26. For example, control logic 28 is responsible for directing scan engine 22 to initiate a scan of a set of objects placed on the MFP's platen. Control logic 28 can then direct print engine 24 to print the digital image generated from the scan an/or direct facsimile engine 26 to send a facsimile message containing that digital image. User interface 30 represents generally any circuitry and other physical components enabling a user to interact with control logic 28. For example, user interface 30 may include a touch screen and/or buttons.

Printer 14 includes print engine 32 and control logic 34. Print engine 32 represents the circuitry and other physical components that allow printer 14 to produce an image on a media sheet. Control logic 34 represents one or more programs capable of controlling the operation of print engine 32. For example, control logic 34 is responsible for receiving printing instructions from computer 18, processing those instructions, and directing the actions of print engine 32 according to the processed instructions.

Scanner 16 includes scan engine 36 and control logic 38. Scan engine 36 represents the circuitry and other physical components that allow scanner 16 to form a digital image of a physical object. Control logic 38 represents one or more programs capable of controlling the operation of scan engine 36. For example, control logic 38 receives scanning instructions entered through its own user interface or through computer 18 to initiate a scan of an object placed on the platen of scanner 16. Control logic 38 then, using data from scan engine 36, generates a digital image of the object.

Computer 18 includes application 40, MFP driver 42, printer driver 44, and scanner driver 46. Application 40 represents generally any computer program capable of utilizing one or more functions provided by MFP 12, printer 14, and/or scanner 16. For example, application 40 may be a word processor capable of sending printing instructions. Application 40 may be a graphics editing program capable of both sending printing instructions and scanning instructions.

In general, a driver is a program responsible for translating generic instructions received from application 40 into device specific instructions capable of being processed by a particular device. MFP driver 42 represents a program capable translating instructions received from application 40 into device specific instructions for MFP 12. Printer driver 44 represents a program capable translating instructions received from application 40 into device specific instructions for printer 14. Scanner driver 46 represents a program capable translating instructions received from application 40 into device specific instructions for scanner 16.

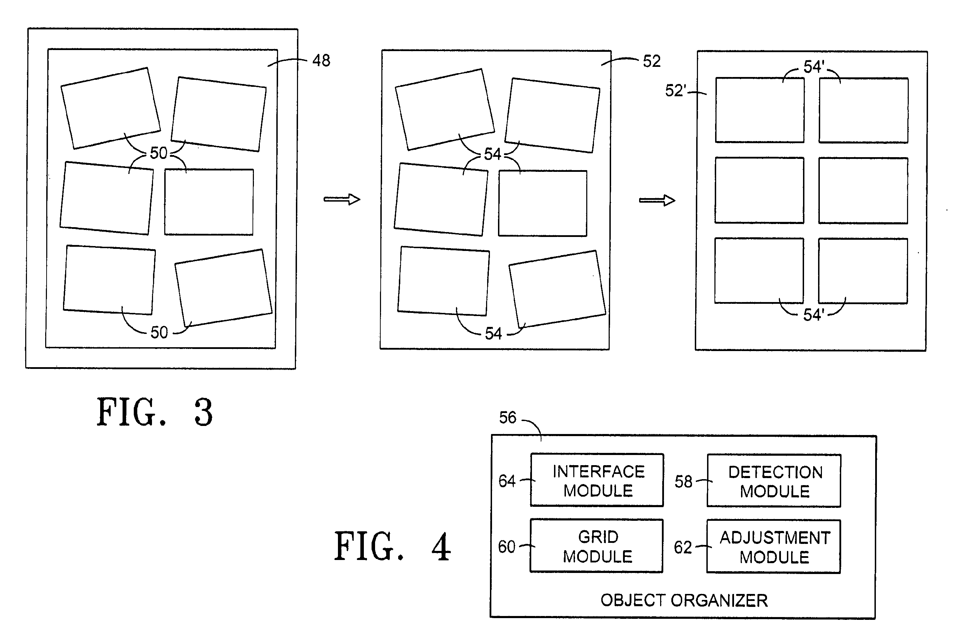

In computing environment 10 of Fig. 1, MFP 12 and scanner 16 are both capable of scanning a physical object to produce a digital image. Each device 12 and 16 has a platen on which a user can arrange a set of physical objects. Fig. 3 illustrates platen 48 on which physical objects 50 are loosely arranged. Scanning the contents of platen 48 generates digital image 52 containing digitized objects 54 that are also loosely arranged. Using an object organizer (described below with reference to Fig. 4) digital image 52 can be organized creating digital image 52' in which digitized objects 54' are arranged in a more uniform manner.

Fig. 4 is a block diagram illustrating object organizer 56 that, as alluded to above, is responsible for organizing a digital image. With reference back to Fig. 2, object organizer 56 may be found on MFP 12, printer 14, scanner 16, and/or computer 18. Object organizer 56 may be an integral part of control logic 28 of MFP 12, control logic 34 of printer 14, and/or control logic 38 of scanner 16. Object organizer 56 may be an integral part of application 40, MFP driver 42, printer driver 44, and/or scanner driver 46. Alternatively, object organizer 56 may be a stand alone program running on computer 18.

Object organizer 56 includes detection module 58, grid module 60, adjustment module 62, and interface module 64. Detection module 58 represents generally any program capable of identifying one or more digitized objects within a digital image. In doing so, detection module 58 may implement one or more well known edge detection algorithms which are well suited for rectangular objects such as photographs and business cards. Detection module 58 may also perform its function identifying edges or lines within a digitized object. For example a digitized portion of a music score will include a number of parallel lines that can be readily detected.

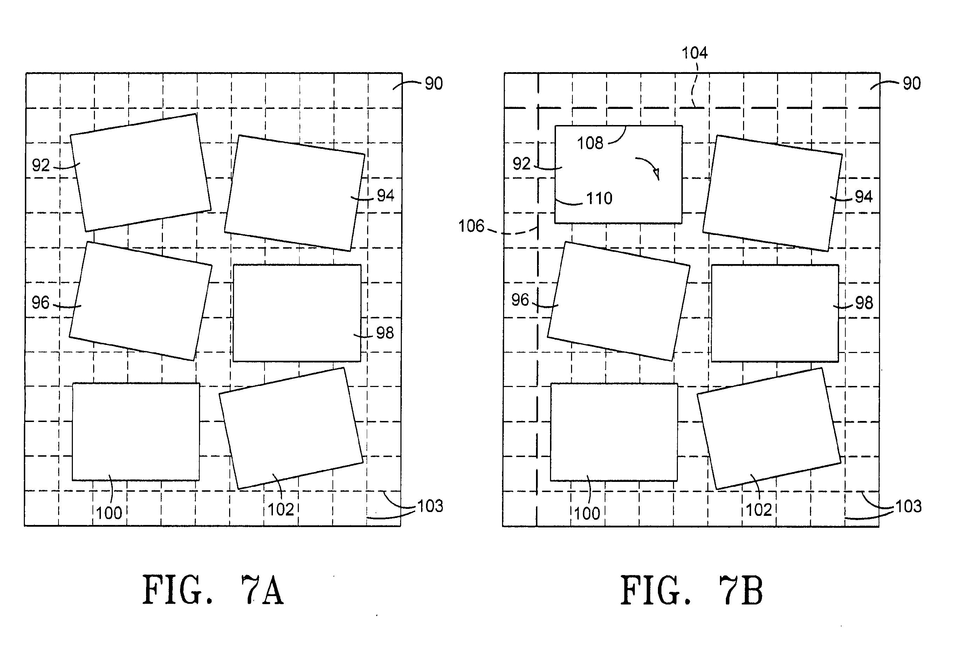

Grid module 60 represents generally any program capable of providing an alignment grid for a digital image. An alignment grid is a virtual lattice made up of evenly spaced sets of generally perpendicular grid lines. For example, each vertical grid line extends the height of a digital image. The set of vertical grid lines are each evenly spaced to span the horizontal dimension of the digital image. Similarly, each horizontal grid line extends the width of the digital image. The set of horizontal grid lines are each evenly spaced to span a vertical dimension of the digital image. Grid module 60 may determine the placement and spacing between the grid lines arbitrarily or based upon the rough positioning, within the digital image, of the digitized objects identified by detection module 58. An example of an alignment grid will be discussed below with reference to Figs. 7A-7F.

Adjustment module 62 represents generally any program capable of adjusting a digitized object to a prescribed state. This includes rotating, repositioning, and/or resizing digitized objects within a digital image. Various methods for rotating, repositioning, and resizing an identified portion of a digital image are well known and implemented in many image manipulation computer applications. For example, where detection module 58 has identified an edge of a digitized object, adjustment module 62 rotates that digitized object until the edge is generally parallel with a grid line. To do so, adjustment module 62 might rotate the digitized object until the slope of the edge equals the slope of the grid line. Adjustment module 62 then repositions the digitized object so that the identified edge is in-line with a grid line. To do so, adjustment module 62 might move the digitized object until an equation defining the position of the edge within the digital image is the same as an equation defining the grid line. Where detection module 58 identifies perpendicular edges of the digitized object, adjustment module 62 can reposition the digitized object so that one edge is in-line with a first grid line and the other perpendicular edge is in-line with a second grid line perpendicular to the first. Adjustment module 62 may perform its function by assigning a snap line to a digitized object and then aligning the snap line to a grid line. A snap line, for example, may be a virtual (rather than detected) edge of a digitized object, a center line, or some other line having some relation to the digitized object.

With the edges of a digitized object identified, adjustment module can identify an area of the digital image filled by the digitized object. Adjustment module 62 can then selectively enlarge or reduce that area to resize the particular digitized object.

Interface module 64 represents generally any program capable of directing external instructions to the other components 58-62 of object organizer 56. External instructions, for example may incude a prescribed state or states for a digitized object or objects. Referring back to Fig. 2, object organizer 56 may be a feature of MFP 12 that, for example, can be turned on or off or directed to resize digitized objects to user selected, random, or uniform dimensions. A user enters desired instructions through user interface 30 which are then sent to interface module 64 which in turn directs the other modules 58-62 of object organizer 56 accordingly.

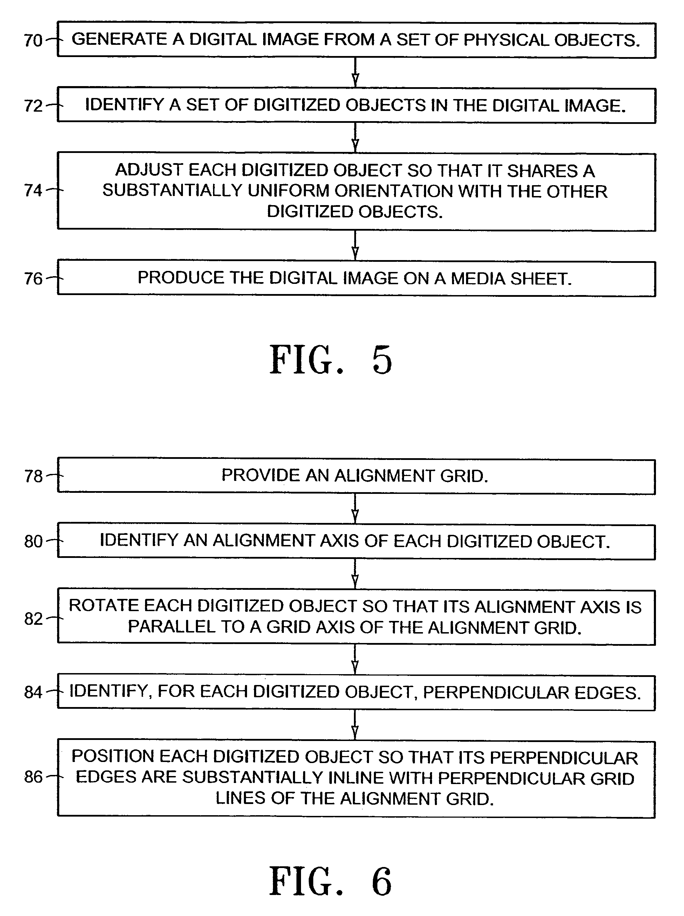

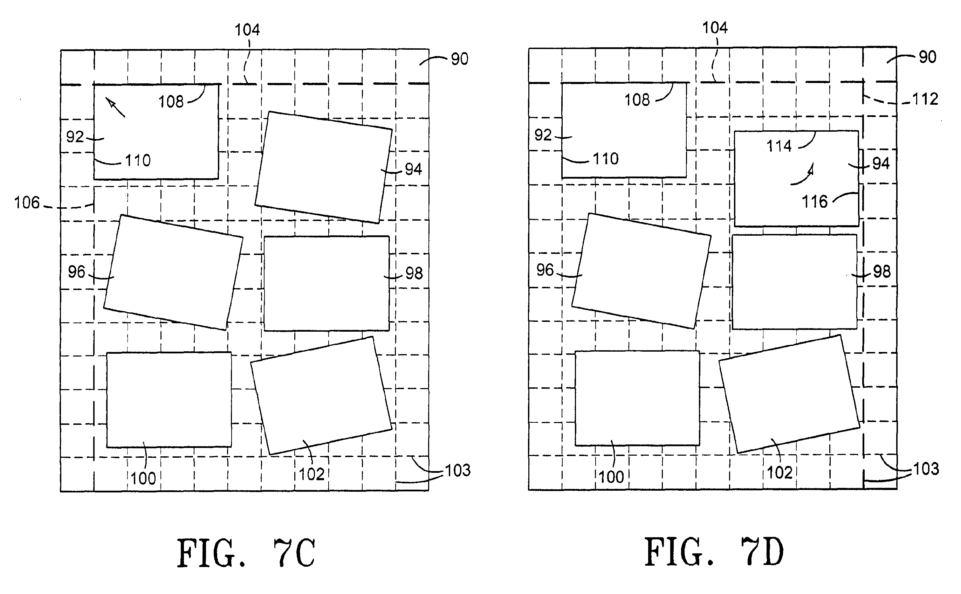

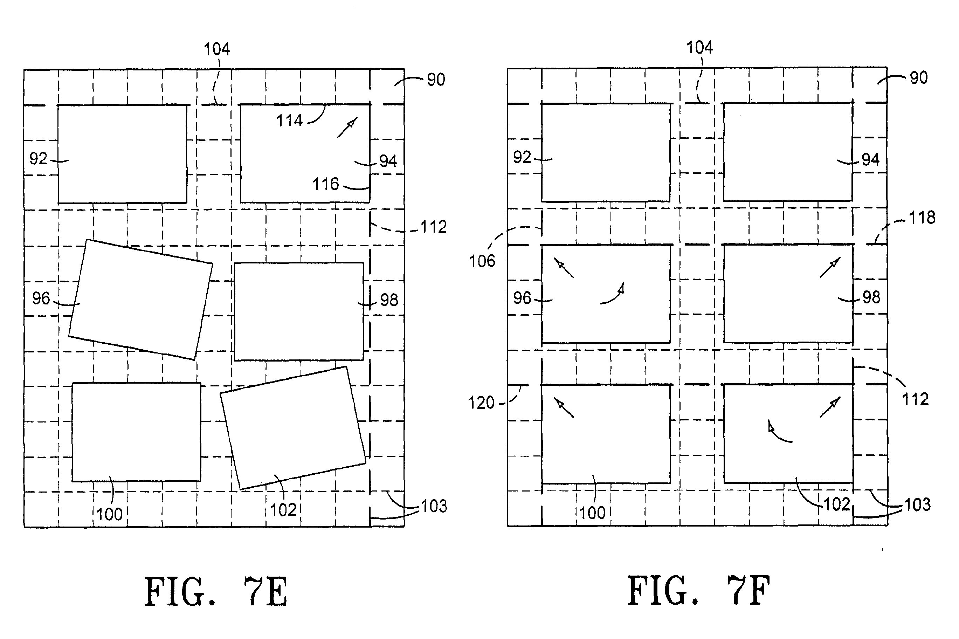

***OPERATION***: The operation of embodiments of the present invention will now be described with reference to Figs. 5-6. Figs. 5-6 are exemplary flow diagrams that help illustrate steps taken to organize a digital image according to embodiments of the present invention. Examples of the steps described are provided in the next section with reference to Figs. 7-11.

Starting with Fig. 5, a digital image is generated from a set of physical objects (step 70). Referring back to Fig. 2, step 70 can be accomplished, for example, by scanning physical objects placed on the platen of MFP 12 or the platen of scanner 16. Alternatively, the digital image may be generated by application 40. A set of digitized objects is identified in the digital image (step 72). Referring to Fig. 4, this can be accomplished by detection module 58 of object organizer 56.

Each digitized object is adjusted so that it shares a substantially uniform state with the other digitized objects (step 74). Adjusting can involve rotating, repositioning, and/or resizing. A digitized object shares a substantially uniform state with another digitized object if they share a size and/or orientation and/or if they are located to create a uniform placement pattern within the digital image. Step 74, for example, can be accomplished by adjustment module 62 of object organizer 56. Step 74 is expanded upon in Fig. 6. The digital image is now organized and can be produced on a media sheet (step 76). Alternatively, producing a digital image can include saving the digital image and/or transmitting the digital image via electronic mail or other means,

Referring back to Fig. 2, where object organizer 56 is part of control logic 28 of MFP 12, each of steps 70-76 can be performed by MFP 12. For example, steps 72-76 can each be sequentially performed automatically and immediately upon the completion of step 70. Where, for example, object organizer 56 is part of control logic 38 of scanner 16, steps 70-74 can be performed by scanner 16. For example, steps 72 and 74 can be performed automatically upon the completion of step 70. Where for example, object organizer 56 is part of control logic 34 of printer 14, steps 72-76 can be performed by printer 16.

The exemplary flow diagram of Fig. 6 expands on step 74 of Fig. 5. An alignment grid is provided for the digital image being organized (step 78). As described above, an alignment grid is a virtual lattice of perpendicular grid lines. The alignment grid is superimposed over the digital image. The alignment grid may be provided by grid module 60 (Fig. 4) and need only be perceivable by adjustment module 62.

An alignment axis of each digitized object is identified (step 80). An alignment axis, for example, can be an edge of the digitized object or a perceivable line within the digitized object. Each digitized object is rotated so that its alignment axis is generally parallel to a grid axis of the alignment grid (step 82). Two perpendicular edges of each digitized image are identified (step 84), and each digitized image is positioned so that its two identified perpendicular edges are each places substantially in-line with a grid line of the alignment grid (step 86).

***EXAMPLES:*** Figs. 7A-7F help illustrate the steps 78-86 of Fig. 6. Starting with Fig. 7A, digital image 90 contains digitized images 92-102. Alignment grid 103 has been superimposed on digital image 90. It is readily apparent in Fig. 7A that digitized objects 92-102 are not uniformly oriented with respect to one another. However, the digitized objects have been placed in a pattern having two columns and three rows.

Referring now to Fig, 7B, perpendicular grid lines 104 and 106 are noted as well as edges 108 and 110 of digitized object 92. Grid lines 104 and 106 define a boundary for the column and row containing digitized object 92. Digitized object 92 has been rotated so that its alignment axes (edges 108 and 110) are parallel to alignment axes (grid lines 104 and 106 respectively) of alignment grid 103. Moving to Fig. 7C, digitized object 92 has been repositioned so that edge 108 is in-line with grid line 104 and edge 110 is in-line with grid line 106. In other words, digitized object 92 has been snapped to grid lines 104 and 106.

Referring to Fig. 7D, grid lines 104 and 112 are noted as well as edges 114 and 116 of digitized object 94. Grid lines 104 and 112 define a boundary for the column and row containing digitized object 94. Digitized object 94 has been rotated so that its alignment axes (edges 114 and 116) are parallel to alignment axes (grid lines 104 and 112) of alignment grid 103. Moving to Fig. 7E, digitized object 94 has been repositioned so that edge 114 is in-line with grid line 104 and edge 116 is in-line with grid line 112. In other words, digitized image 94 has been snapped to grid lines 104 and 112. At this point, digitized object 94 has been adjusted so that it shares a generally uniform orientation with digitized object 92. Both have been rotated and positioned so that each has an edge in-line with grid line 104.

Referring now to Fig. 7F, gridlines 104, 106, 112, 118, and 120 are noted. These grid lines define boundaries for the columns and rows containing digitized objects 92-102. Digitized object 96 has been rotated and repositioned so that two of its edges are in-line with grid lines 106 and 118. Digitized object 98 needed only to be repositioned so that two of its edges are now in-line with grid lines 112 and 118. Digitized object 100 has been repositioned so that two of its edges are now in line with grid lines 106 and 120. Digitized object 102 has been rotated and repositioned so that two of its edges are now in line with grid lines 112 and 120. At this point, digitized objects 92-104 have been adjusted so that each shares a generally uniform orientation with the others.

Grid lines 104, 106, 112, 118, and 120 were selected, in this example, in an attempt to preserve the rough positioning of digitized objects shown in Fig. 7A. However, other grid lines may have been selected to achieve the same or a different goal. For example, different grid lines may have been positioned and/or selected to either increase or decrease the spacing between digitized objects 92-102.

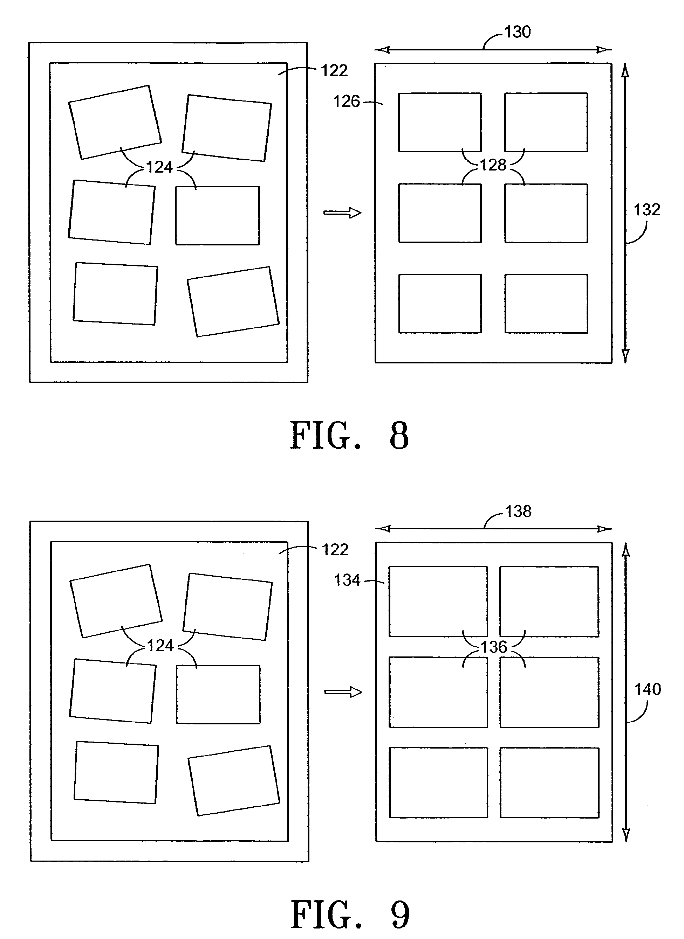

The examples of Figs. 8-16 illustrate varying manners in which a digital image can be organized according to embodiments of the present invention. Starting with Fig. 8, uniformly shaped physical objects 124 are roughly placed on platen 122 in two columns and three rows. Platen 122 is scanned and the resulting digital image 126 is organized such that the digitized objects 128 share a uniform object spacing across dimensions 130 and 132 of digital image 126. More specifically, digitized objects 128 have been rotated and positioned so that they substantially span dimensions 130 and 132.

Fig. 9 shows the same physical objects 124 roughly placed on platen 122. Platen 122 is scanned and the resulting digital image 134 is organized such that the digitized objects 136 have been uniformly resized (enlarged) and share a uniform object spacing across dimensions 138 and 140 of digital image 134. More specifically, digitized objects 136 have been rotated, resized, and positioned so that they substantially span dimensions 138 and 140.

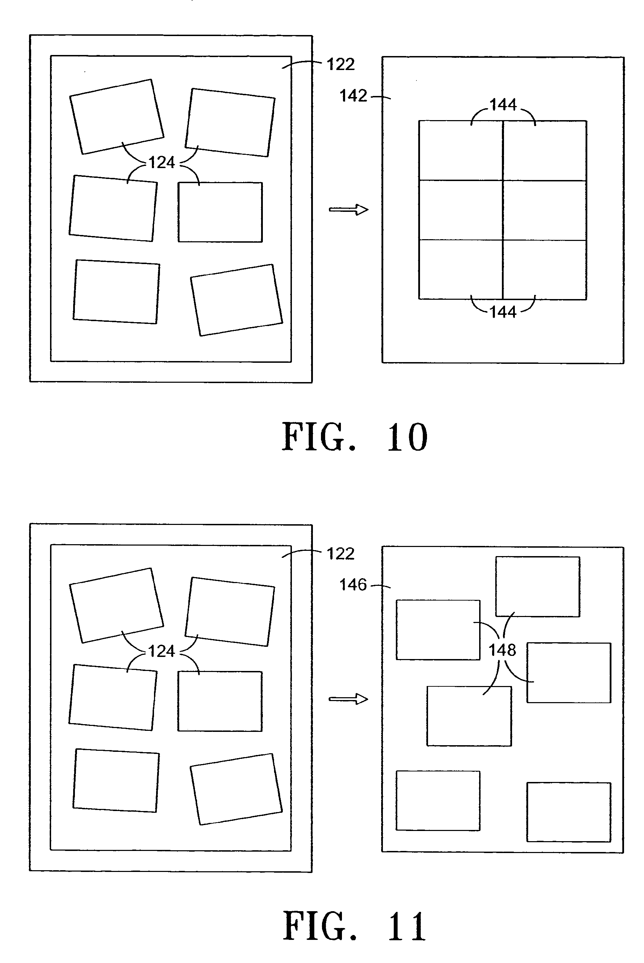

Fig. 10 shows randomly sized objects 124 roughly placed on platen 122 in two columns and three rows. Platen 122 is scanned and the resulting digital image 142 is organized such that the digitized objects 144 have each been rotated and positioned so that they form what appears to be a single digitized object with no or little spacing between digitized objects 144.

Fig. 11 shows randomly sized objects 124 roughly placed on platen 122 in two columns and three rows. Platen 122 is scanned and the resulting digital image 146 is organized such that the digitized objects 148 have each been rotated so that they share a uniform orientation. Digitized objects 148 have also been randomly positioned.

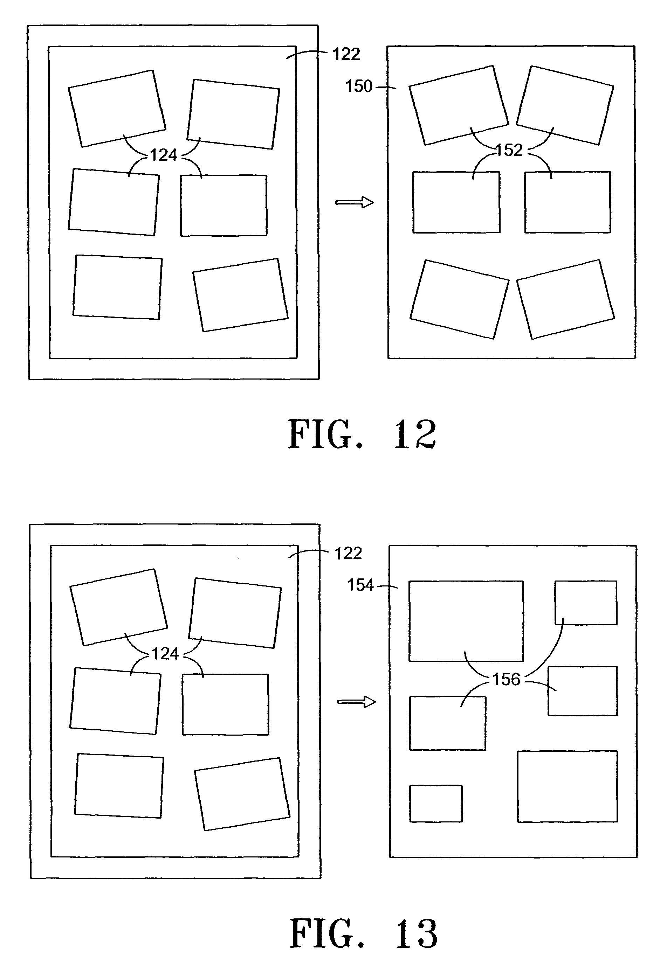

Fig. 12 shows randomly sized objects 124 roughly placed on platen 122 in two columns and three rows. Platen 122 is scanned and the resulting digital image 150 is organized such that the digitized objects 152 have each been rotated and positioned so that some of the digitized objects share a uniform orientation with one another.

Fig. 13 shows randomly sized objects 124 roughly placed on platen 122 in two columns and three rows. Platen 122 is scanned and the resulting digital image 154 is organized such that the digitized objects 156 have been randomly resized and uniformly oriented and positioned.

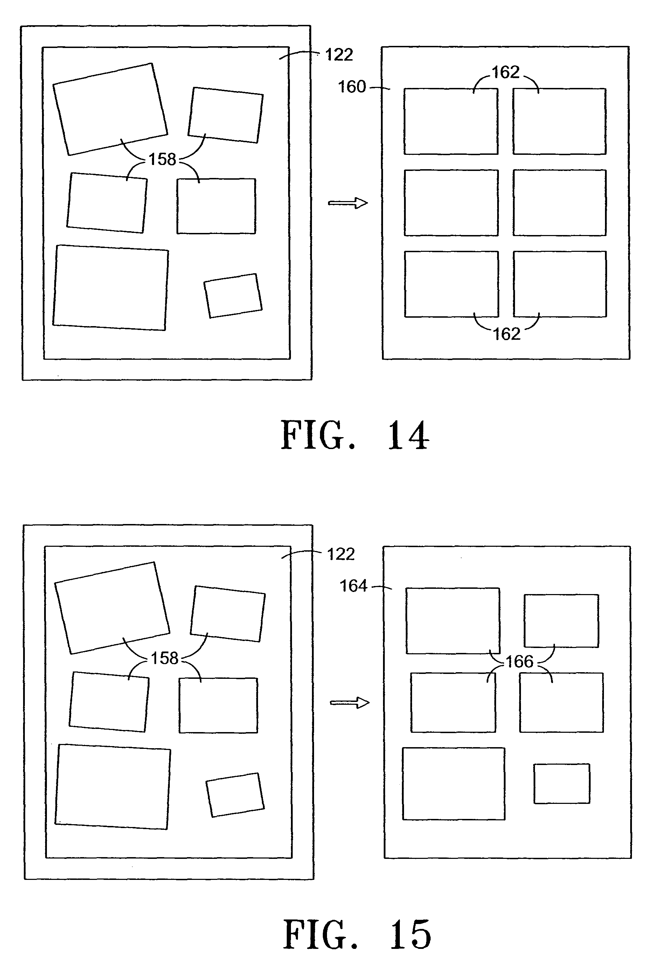

Fig. 14 shows randomly sized objects 158 roughly placed on platen 122 in two columns and three rows. Platen 122 is scanned and the resulting digital image 160 is organized such that the digitized objects 162 have each been resized (some enlarged and some shrunk reduced) to a pre-selected size. Digitized objects 162 have also been rotated and positioned so that they share a uniform object spacing between one another.

Fig. 15 shows the same randomly sized physical objects 158 roughly placed on platen 122. Platen 122 is scanned and the resulting digital image 164 is organized such that each of the digitized objects 166 is not resized but is rotated and positioned so that the digitized objects 166 share a substantially uniform orientation while being centered in two columns and three rows.

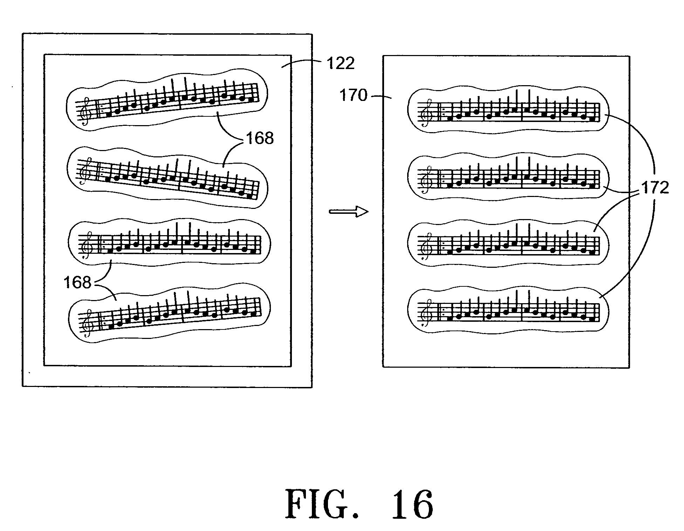

In Figs. 8-11, the physical objects 124 and 158 placed on platen 122 were regularly shaped and rectangular. In Fig. 16, physical objects 168 placed on platen 122 are cut out lines of sheet music. The cut lines that define the edges of physical objects 168 are not straight, so they cannot be rotated to be parallel with or snapped to a grid line of an alignment grid (see Figs. 7A-7F). However, included in the contents of each physical object 168 are straight lines that can be identified as an alignment axis. Here, platen 122 is scanned and the resulting digital image 170 is organized such that digitized objects 172 share a generally uniform orientation. More specifically, digitized objects 172 have each been rotated such that the alignment axes (lines) of digitized objects 172 are substantially parallel with one another.

***CONCLUSION***: The diagrams of Figs. 2 and 4 show the architecture, functionality, and operation of various embodiments of the present invention. A number of the blocks are defined as programs. Each of those blocks may represent in whole or in part a module, segment, or portion of code that comprises one or more executable instructions to implement the specified logical function(s). Each block may represent a circuit or a number of interconnected circuits to implement the specified logical function(s). The exemplary interface of Fig. 4 is just that - an example of one of many possible interfaces that can be used to select digital images.

Also, the present invention can be embodied in any computer-readable media for use by or in connection with an instruction execution system such as a computer/processor based system or an ASIC (Application Specific Integrated Circuit) or other system that can fetch or obtain the logic from computer-readable media and execute the instructions contained therein. "Computer-readable media" can be any media that can contain, store, or maintain programs and data for use by or in connection with the instruction execution system. Computer readable media can comprise any one of many physical media such as, for example, electronic, magnetic, optical, electromagnetic, infrared, or semiconductor media. More specific examples of suitable computer-readable media include, but are not limited to, a portable magnetic computer diskette such as floppy diskettes or hard drives, a random access memory (RAM), a read-only memory (ROM), an erasable programmable read-only memory, or a portable compact disc.

Although the flow diagrams of Figs. 5 and 6 show specific orders of execution, the orders of execution may differ from that which is depicted. For example, the order of execution of two or more blocks may be scrambled relative to the order shown. Also, two or more blocks shown in succession may be executed concurrently or with partial concurrence. All such variations are within the scope of the present invention. Figs. 3 and 7-16 provide examples of how a digital image may be organized. Other examples exist and are within the scope of the present invention.

The present invention has been shown and described with reference to the foregoing exemplary embodiments. It is to be understood, however, that other forms, details, and embodiments may be made without departing from the spirit and scope of the invention that is defined in the following claims.

## Claims

1. A method for organizing a digital image (90), comprising:
identifying, within the digital image(90), a set of digitized objects (92-102);
providing an alignment grid (103) for the digital image (90);
for each digitized object (92-102):
rotating that digitized object (92-102) so that an alignment axis (104, 106, 112, 118, 120) of that digitized object (92-102) is generally parallel with an axis (104, 106, 112, 118, 120) of the alignment grid (103); and
positioning that digitized object (92-102) so that an edge of that digitized object (92-102) is substantially in line with a grid line of the alignment grid (103); and
wherein the steps of identifying, providing, rotating, and positioning are performed automatically upon generation of the digital image (90).

2. A computer readable medium having instructions for:
identifying, within a digital image (90), a set of digitized objects (92-102);
providing an alignment grid (103) for the digital image (90); and
for each digitized object (92-102):
rotating that digitized object (92-102) so that an alignment axis (104, 106, 112, 118, 120) of that digitized object (92-102) is generally parallel with an axis (104, 106, 112, 118, 120) of the alignment grid (103); and
positioning that digitized object (92-102) so that an edge of that digitized object (92-102) is substantially in line with a grid line of the alignment grid (103).

3. A digital image (90) organizing system, comprising:
a detection module (58) operable to identify, within the digital image (90), a set of digitized objects (92-102); and
an adjustment module (62) operable to adjust at least one digitized object (92-102) within the digital image (90) so that the adjusted digitized object (92-102) at least substantially conforms to a prescribed state.

4. The system of Claim 3, wherein the adjustment module (62) is operable to adjust at least one digitized object (92-102) within the digital image (90) so that the adjusted digitized object (92-102) shares a generally uniform state with another digitized object (92-102).

5. The system of Claim 3, wherein the adjustment module (62) is operable to:
rotate the digitized object (92-102) so that an alignment axis (104, 106, 112, 118, 120) of the digitized object (92-102) is generally parallel with an axis (104, 106, 112, 118, 120) of an alignment grid (103); and
position the digitized object (92-102) so that an edge of that digitized object (92-102) is substantially in line with a grid line of the alignment grid (103).

6. The system of Claim 3, wherein the adjustment module (62) is operable to adjust at least one digitized object (92-102) within the digital image (90) so that the adjusted digitized object (92-102) at least substantially conforms to a prescribed location, orientation, and size.

7. The system of Claim 3, wherein the adjustment module (62) is operable to reposition one or more of the digitized objects (92-102) to establish, across a dimension of the digital image (90), a substantially uniform object spacing among the set of digitized objects (92-102).

8. The system of Claim 3, wherein the adjustment module (62) is operable to resize at least one digitized object (92-102) so that one or more of the digitized objects (92-102) substantially spans the dimension of the digital image (90).

9. A multifunction peripheral, comprising:
a scan engine (22) operable to generate a digital image (90) containing a set of digitized objects (92-102), each of the digitized objects (92-102) being an electronic replica of a physical object;
a detection module (58) operable to identify, within the digital image (90), a set of digitized objects (92-102);
an adjustment module (62) operable to adjust at least one digitized object (92-102) within the digital image (90) so that the adjusted digitized object (92-102) at least substantially conforms to a prescribed state; and
a print engine (24) operable to produce the digital image (90) on a media sheet.

10. The multifunction peripheral of Claim 9, further comprising an interface module operable to direct the detection module (58) and the adjustment module (62) to perform their functions upon generation of the digital image (90) by the scan engine (22) and to instruct the print engine (24) to produce the digital image (90) once the detection module (58) and the adjustment module (62) have performed their functions.
